# DEMANDE DE BREVET EUROPEEN

(11) **EP 2 372 258 A1**
(43) Date de publication de la demande: **05.10.2011**
(21) Numéro de dépôt: 11160090.4
(22) Date de dépôt: 28.03.2011
(51) Int. Cl.: F24D 3/10, F24D 3/18

(54) **Bouteille de découplage hydraulique entre plusieurs circuits d'une installation de chauffage et/ou de climatisation.**

(30) Priorité: 31.03.2010 FR 1001322
(71) Demandeur: De Dietrich Thermique, 67580 Mertzwiller (FR)
(72) Inventeur: Oberle, Frédéric, 67500 Haguenau (FR); Triboix, Alain, 67220 Fouchy (FR)
(74) Mandataire: Metz, Paul

(57) **Abrégé**

La bouteille de découplage hydraulique se caractérise en ce qu'elle affecte une forme générale cylindrique et en ce qu'elle comporte des sorties et des entrées inférieures et supérieures tubulaires se prolongeant à l'intérieur de la bouteille sous la forme de saillies droites ou coudées et raccordées par leurs extrémités extérieures à au moins un circuit générateur et à un ou des circuit(s) utilisateur(s).

Cette invention trouve application notamment dans le domaine du chauffage des locaux, bureaux et habitations.

## Description

La présente invention se rapporte à une bouteille de découplage hydraulique entre plusieurs circuits dans le domaine des installations de chauffage et de climatisation.

Dans le domaine du chauffage et de la climatisation des habitations et locaux, on utilise beaucoup actuellement plusieurs sources de chaleur dont l'organe principal peut être une chaudière à laquelle on adjoint une ou plusieurs sources auxiliaires utilisées en relève de la chaudière telles qu'une pompe à chaleur, une batterie de collecteurs solaires ou bien une résistance électrique d'appoint. L'organe principal peut également être une pompe à chaleur à laquelle on adjoint une chaudière et éventuellement d'autres moyens annexes de chauffage.

Ces sources auxiliaires apportent des calories supplémentaires qui pour certaines, sont gratuites et font partie des énergies renouvelables et pour d'autres sont à faible coût car provenant d'une récupération.

Il se trouve que parmi les différentes sources, principales ou devenant principales pendant une période donnée, certaines présentent une plage de fonctionnement normal ou nominal c'est-à-dire à rendement optimal à des températures assez différentes les unes des autres.

Par exemple, dans une installation de chauffage performante, il faut faire travailler les différentes sources de chaleur à leur meilleur rendement de façon à utiliser au mieux toutes les calories produites ou transférées.

Le secteur des pompes à chaleur est en pleine expansion actuellement. Les prévisions annoncent une augmentation des ventes considérables dans le domaine du chauffage domestique.

Cette forte demande provient de l'énergie gratuite récupérée et apportée par la pompe à chaleur à l'installation de chauffage. Actuellement, les pompes à chaleur, à coût adapté aux particuliers, n'offrent pas encore une puissance suffisante ou ne peuvent être exploitées à une puissance suffisante pour subvenir en permanence à tous les besoins en chauffage et en eau chaude d'une famille sous nos latitudes. Elles sont utilisées en tant que source principale pendant les périodes chaudes et tempérées, mais l'installation nécessite un appoint ou une deuxième source, devenant principale, pour les périodes froides.

Se pose immédiatement le problème du couplage des circuits de ces nouveaux générateurs thermiques aux chaudières existantes ou nécessaires pour fonctionner surtout en période froide. Les installateurs et à travers eux les utilisateurs, recherchent des solutions simples et économiques de raccordement tout en préservant un bon rendement d'ensemble de l'installation de chauffage.

Le couplage porte aussi sur l'intégration des collecteurs solaires ou autre(s) source(s) supplémentaire(s), dans une installation de chauffage, ceux-ci présentant des caractéristiques propres de fonctionnement ainsi qu'une gamme de températures de fonctionnement différente.

Ces différentes sources présentent chacune sa spécificité.

Ainsi, les pompes à chaleur devraient apporter des calories dans une eau à une température identique ou voisine à celle de l'eau de départ de la chaudière, ce qui dégraderait ses performances. Il faudrait aussi abaisser la température de l'eau circulant dans les collecteurs solaires par bon ensoleillement par exemple par un échangeur intermédiaire.

Par ailleurs, les températures de l'eau dans les circuits utilisateurs sont essentiellement variables et différentes selon les types. Il peut exister sur une même installation des radiateurs à eau chaude et des planchers chauffants fonctionnant à des températures beaucoup plus basses.

Par exemple, l'eau circulant dans les méandres des tuyaux montés sur les plaques de chauffage par le sol se trouve à une température comprise entre 30 et 40°C alors que l'eau circulant dans les radiateurs arrive à une température de 50 à 60°C.

Les sources étant utilisées conjointement pour des raisons d'économie d'énergie, on couple classiquement les circuits par des montages complexes utilisant des échangeurs et des vannes de mélange.

Cette complexité apporte un surcoût à l'installation au détriment de l'économie possible.

Actuellement, les constructeurs de chaudières proposent un réservoir tampon qui permet une stratification naturelle, mais les raccordements et les commandes s'effectuent de façon traditionnelle par collecteurs, répartiteurs et vannes à trois voies.

Cette solution est encombrante et coûteuse et en outre ne résout pas les problèmes inhérents à la disparité des sources de chaleur et des températures des fluides comme celles existant entre une chaudière et une pompe à chaleur et à la perturbation de la stratification naturelle par les courants de circulation des circuits.

On a déjà construit des coupleurs thermiques permettant d'utiliser simultanément plusieurs sources de chaleur dont les caractéristiques de fonctionnement sont très différentes comme les chaudières et les pompes à chaleur.

Le brevet français n° FR 2503843 au nom de la société DE DIETRICH se rapporte ainsi à un simple vase de couplage entre deux générateurs de chauffe notamment une chaudière et une pompe à chaleur. Selon cette invention, le vase de couplage présente une forme générale cylindrique à fond bombé délimitant un compartiment inférieur de décantation. Ce fond bombé joue le rôle de surface de convergence vers le centre pour engendrer un phénomène de mélange qui est encore augmenté par la résistance électrique centrale. Le but général est de favoriser l'inertie thermique de l'ensemble pour que la pompe à chaleur ne fonctionne pas en cycles courts répétitifs préjudiciables à son rendement et à sa durée de vie.

La publication WO 2007/105209 au nom de SEIDEL, se rapporte à un réseau de stockage et de distribution d'énergie thermique par un fluide à au moins un utilisateur, comprenant au moins un réservoir de stockage. Ce réservoir de stockage présente une multitude de jonctions et de tubes d'entrées et de sorties à différents niveaux représentés sur les figures 12A à 12D de cette publication, accompagnées d'une description extrêmement limitée d'un nombre très restreint de lignes. Au mieux de la compréhension, il s'agit de piquages d'entrées ou de sorties permettant des branchements en parallèle pour différentes alimentations et arrivées de circuits fournisseurs ou utilisateurs extérieurs et permettant des liaisons de court circuit à l'extérieur du réservoir entre les différentes couches intérieures. On cherche à extraire de ce réservoir de l'eau à différents niveaux ou à raccorder certains de ces niveaux entre eux selon l'application visée.

L'invention décrite dans la demande européenne EP 0387633 au nom de ZORTEA concerne un coupleur hydraulique en tour assurant l'alimentation de différents circuits de chauffage et de climatisation ainsi que de réchauffage de l'eau sanitaire d'une fabrique à partir de sorties situées à différents niveaux de hauteur sur cette tour. Ce coupleur est alimenté à partir d'un échangeur branché sur une unité extérieure de fourniture de calories délivrant un fluide à haute température. Cette invention nous montre l'existence de coupleurs hydrauliques du type tour c'est-à-dire se développant en hauteur, pour lesquels on utilise les différences de température de l'eau liées à la hauteur de prélèvement. C'est donc bien la hauteur exceptionnelle du coupleur hydraulique qui joue un rôle essentiel. Classiquement, dans le volume supérieur se trouve de l'eau à la température la plus élevée alors qu'en partie basse l'eau est moins chaude et peut être utilisée à un autre usage. Il s'agit du phénomène thermique bien connu de la différence de densité entre un même liquide à des températures différentes.

Dans le brevet français n° 2739177 au nom de la société financière et commerciale du Chablais est décrite une invention qui vise plutôt l'homogénéisation de température du volume intérieur d'un coupleur hydraulique dont la qualification a été bien choisie par l'expression «bouteille d'homogénéisation». Dans cette bouteille d'homogénéisation on produit comme indiqué par les flèches sur les dessins, des trajets courts de retour sur le même côté, analogues à des court-circuits pour le chauffage par radiateurs, en même temps que des trajets plus longs du type diagonaux pour l'aller et le retour de l'eau vers ou à partir du plancher chauffant. Des déflecteurs inclinés forçant le flux dans la direction d'inclinaison sont prévus pour éviter des turbulences dans les zones d'extrémité. Par ailleurs, il n'est pas question de pompe à chaleur, ce qui explique l'absence de moyens spécifiques concernant l'amélioration du fonctionnement et du rendement de celle-ci.

Le but de la présente invention est entièrement différent. Il consiste à assurer le couplage hydraulique d'une pluralité de circuits hydrauliques générateurs de chaleur et récepteurs sans nécessiter des échangeurs et des composants de mélange et les circuits complémentaires associés tout en assurant une indépendance suffisante entre ces circuits et en tenant compte de la disparité de fonctionnement des sources de chaleur ou de froid comme celles existant entre une chaudière et une pompe à chaleur raccordées au même coupleur hydraulique et fonctionnant simultanément ou alternativement. L'objectif de la présente invention est d'individualiser le mieux possible les zones de volume supérieur et les zones de volume inférieur pour améliorer le rendement de la pompe à chaleur et ceci par une moindre influence de l'eau de retour. En raison de ses fonctions particulières, la bouteille selon l'invention doit être qualifiée de bouteille de découplage car elle permet de réaliser une indépendance entre les branches aller et les branches retour des circuits liés aux deux générateurs.

D'autres caractéristiques et avantages de l'invention apparaîtront dans la description qui suit, donnée à titre d'exemple et accompagnée des dessins dans lesquels :
- la figure 1 est une vue schématique en perspective et en transparent d'un exemple de bouteille de découplage pouvant être utilisée dans le domaine du chauffage,
- la figure 2 est une vue en plan de la bouteille de découplage représentée sur la figure 1,
- les figures 3 à 8 sont des vues illustratives de différentes applications dans le domaine du chauffage et de la climatisation avec représentation du ou des clapets dans le ou les circuits utilisateurs dont :

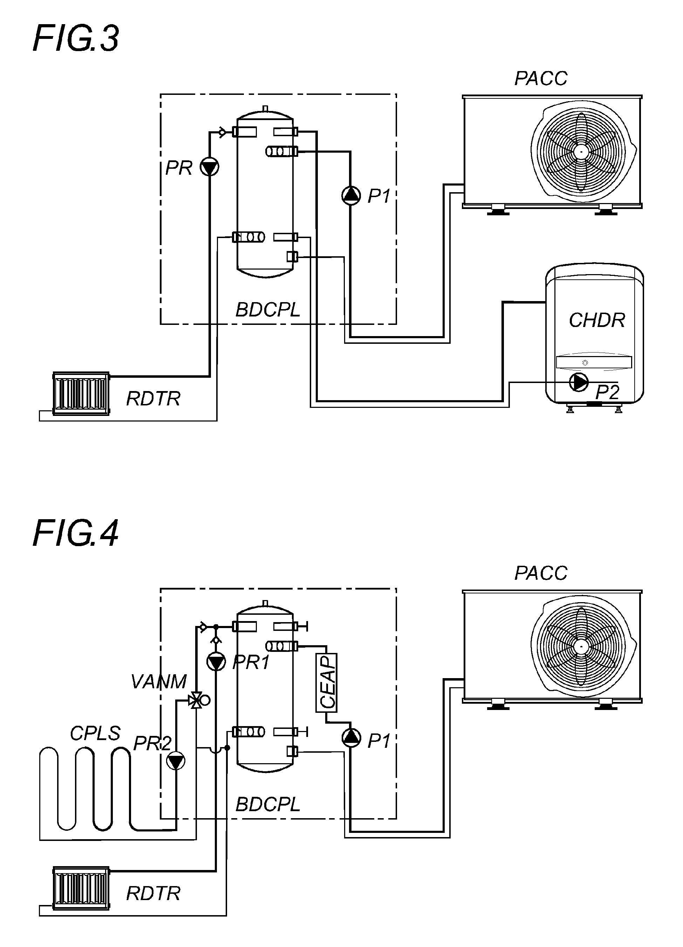

- la figure 3 : un circuit de chauffage à radiateurs à partir d'une pompe à chaleur complète et d'une chaudière,
- la figure 4 : un circuit de chauffage à radiateurs et plancher chauffant à partir d'une pompe à chaleur avec appoint par chauffage électrique,

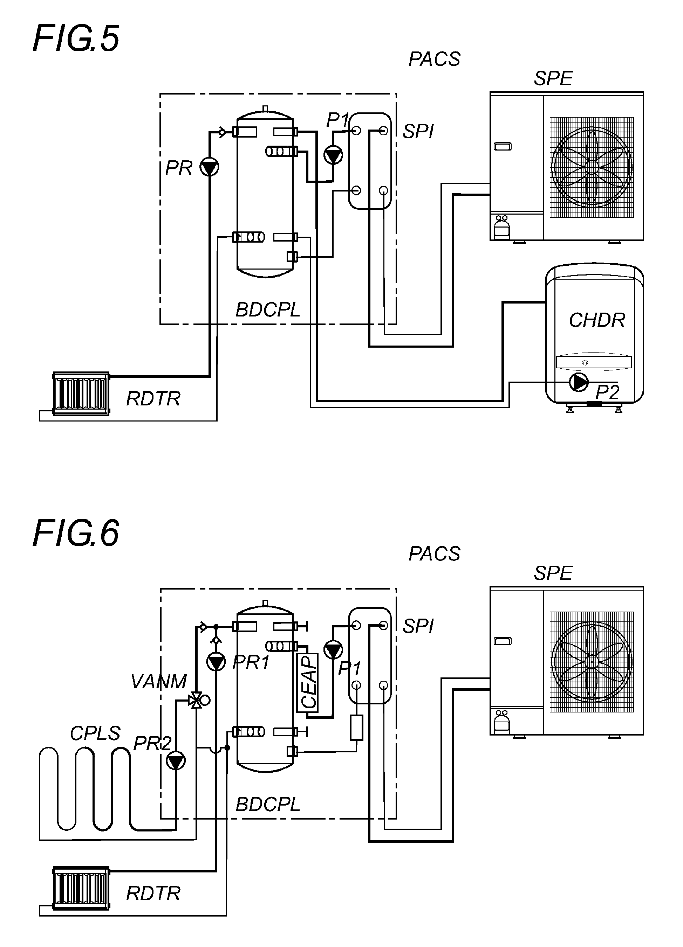

- la figure 5 : un circuit de chauffage à radiateurs à partir d'une pompe à chaleur fractionnée dite "split" et d'une chaudière,
- la figure 6 : un circuit de chauffage à radiateurs et plancher chauffant à partir d'une pompe à chaleur fractionnée dite "split" avec appoint par chauffage électrique,

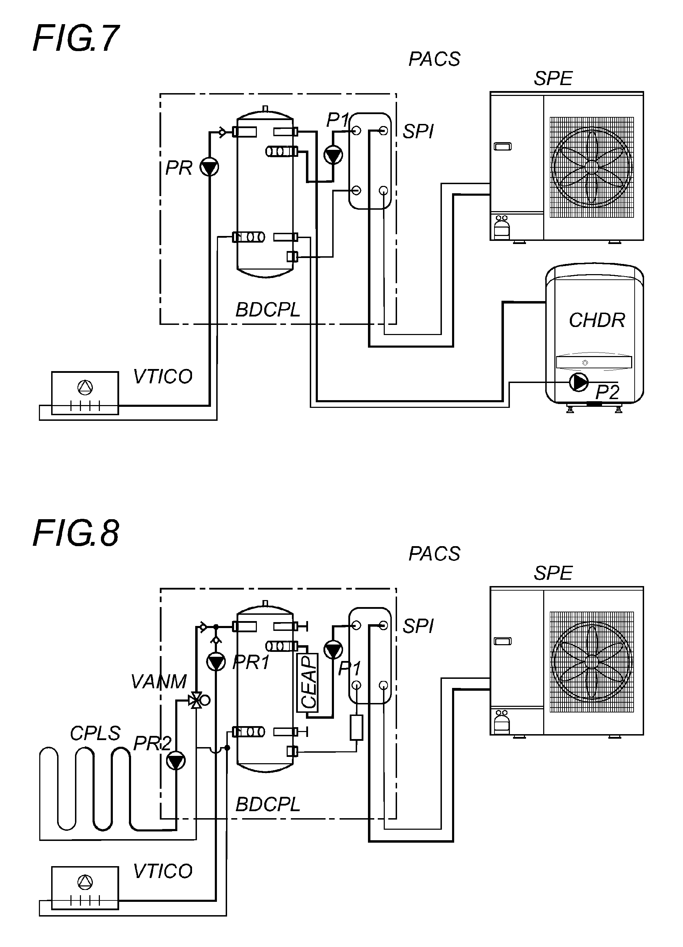

- la figure 7 : un circuit de chauffage à ventilo-convecteurs à partir d'une pompe à chaleur fractionnée dite "split" et d'une chaudière pour une installation mixte de chauffage et de climatisation,
- la figure 8 : un circuit de chauffage à ventilo-convecteurs et plancher chauffant à partir d'une pompe à chaleur fractionnée dite "split" avec appoint par chauffage électrique pour une installation mixte de chauffage et de climatisation.

On décrira ci-après la bouteille de découplage selon l'invention dans une application au domaine du chauffage. Cependant ces applications ne se limitent pas à ce seul domaine. Au contraire, elle apparaît utilisable dans de nombreux domaines notamment dans tous les domaines industriels utilisant plusieurs circuits de fluide dont les domaines agro-alimentaires, la chimie et autres.

De même, les schémas représentés le sont à titre d'exemple et les circuits peuvent comprendre une pluralité de sources de chaleur dont des collecteurs solaires et des sondes de géothermie alimentant une pluralité de récepteurs dont par exemple des ventilo-convecteurs ou des aérothermes. De plus, l'installation de chauffage peut être adjointe à une installation de climatisation à eau réfrigérée utilisant une partie des mêmes circuits.

Pour simplifier la description, on décrira ci-après une bouteille de découplage formant une interface entre un ensemble de sources de chaleur formé d'une pompe à chaleur et d'une chaudière optionnellement remplacée par une résistance électrique en thermoplongeur et un ensemble d'éléments récepteurs diffuseurs de chaleur constitué principalement de radiateurs complétés optionnellement de planchers chauffants et une réalisation avec ventilo-convecteurs.

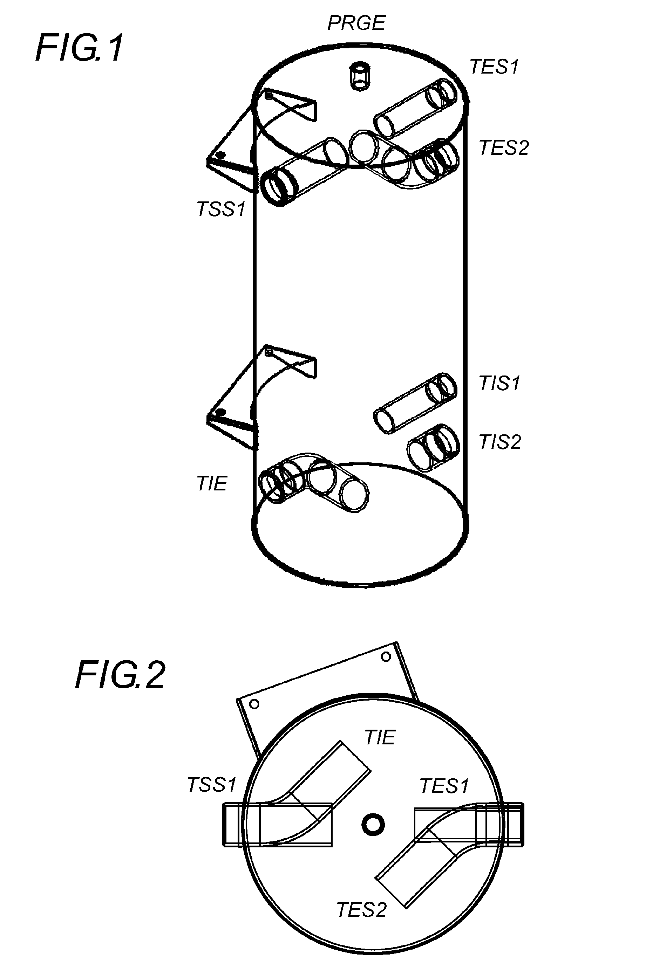

La bouteille de découplage selon l'invention affecte par exemple la forme d'un contenant à corps cylindrique tel que représenté sur les figures 1 et 2.

Il s'agit d'un contenant de hauteur moyenne équivalente à celle d'une chaudière domestique c'est-à-dire très différente de celle d'un coupleur hydraulique du type tour pour lequel la hauteur joue un rôle essentiel pour pouvoir prélever de l'eau à des températures assez différentes.

La bouteille de découplage selon l'invention représente une réserve hydraulique transparente pour les différents circuits c'est-à-dire ne constituant ni une charge hydraulique ni un dissipateur. Elle garantit une relative indépendance hydraulique entre la ou les branches arrivée apportant l'énergie calorifique ou de climatisation au(x) circuit(s) utilisateur(s) et la ou les branches retour se refermant sur le ou les générateurs en service.

Le corps cylindrique comporte dans sa paroi latérale plusieurs entrées et sorties du même fluide liquide caloporteur mais provenant de différents circuits dont des sources et des récepteurs diffuseurs de la chaleur.

Il ne s'agit pas de simples ouvertures dans la paroi, mais de tubes de longueur et de formes différentes et adaptées selon leur emplacement et le circuit dont ils dépendent et dont les extrémités se prolongent dans le volume intérieur de la bouteille. Ces formes et cette configuration permettent de créer à l'intérieur de la bouteille de découplage plusieurs volumes relativement indépendants car les mélanges et les échanges entre eux sont limités.

Dans l'exemple représenté sur les figures on distingue trois tubes en partie supérieure dont deux tubes d'entrée supérieure TES1 et TES2 et un tube de sortie TSS1 à savoir :
- un premier tube d'entrée supérieure TES1 droit d'amenée d'eau chaude relié à la sortie d'une chaudière CHDR. Son extrémité est droite et s'avance en saillie vers le centre du volume intérieur de la bouteille de découplage BDCPL.
- un deuxième tube supérieur d'entrée supérieure TSE 2 à extrémité intérieure coudée en oblique vers la surface latérale interne de la bouteille et inclinée légèrement vers le haut pour amener le flux sortant à être parallèle à la surface latérale de la bouteille et forcer la stratification vers le haut pour diminuer le mélange. Ce tube apporte de l'eau moins chaude provenant du circuit de sortie de la pompe à chaleur. Cette eau sort du tube selon une direction tangentielle à la paroi latérale interne de la bouteille de manière à ne pas créer de turbulences et à limiter le mélange avec le liquide dormant intérieur.
- un tube supérieur de sortie supérieure TSS1 droit disposé au même niveau transversal que le premier tube d'entrée supérieure TSE1 et pratiquement en face de celui-ci. Ce tube supérieur de sortie est relié au circuit utilisateur de chauffage par exemple par radiateurs RDTR. En raison des positions respectives de ces deux tubes, le tube TSS1 est directement gavé en eau chaude de chauffage pour les radiateurs par le premier tube d'entrée TSE1 lors du fonctionnement en appoint de la chaudière.

Le tube supérieur de sortie supérieure TSS1 présente un diamètre supérieur à celui de TES1 pour permettre à toute l'eau ou au moins au maximum de l'eau provenant de TES1 d'arriver au niveau et dans TSS1.

Il existe également trois tubes inférieurs en partie inférieure de la bouteille de découplage dont deux tubes de sortie et un tube d'entrée.

Le premier tube inférieur de sortie inférieure TIS1, situé du côté des sources de chaleur est droit avec une extrémité longue droite se prolongeant comme le premier tube en partie supérieure et ceci à l'intérieur de la bouteille de découplage. Il est relié au retour de la chaudière ou de l'appoint électrique servant de chaudière pour ramener l'eau de retour des radiateurs RDTR.

Le second tube inférieur de sortie inférieure TIS2, situé aussi du côté des sources de chaleur est également un tube droit dont l'extrémité est une saillie courte à l'intérieur de la bouteille de découplage. Il est raccordé au circuit de retour de la pompe à chaleur PACC.

Le troisième tube est un tube inférieur d'entrée inférieure TIE situé du côté du circuit d'utilisation à savoir les circuits et éléments récepteurs et diffuseurs de la chaleur. Ce tube inférieur d'entrée TIE présente une extrémité coudée en oblique vers la paroi latérale adjacente de la bouteille de découplage BDCPL au même niveau que le premier tube inférieur de sortie TIS1 et dont l'oblique est légèrement inclinée vers le bas pour améliorer la stratification et diminuer le mélange. Il est raccordé au circuit de retour des radiateurs RDTR de manière à ramener l'eau à basse température de retour des radiateurs vers le premier tube inférieur de sortie TIS1 par un flux tangentiel et ainsi retourner à la chaudière.

Le tube de l'entrée inférieure TIE est coudé vers la paroi latérale interne de la bouteille de découplage pour générer en partie inférieure un flux tangentiel à la surface latérale interne de la bouteille et ceci de préférence dans le même sens que le flux généré par la deuxième entrée supérieure TES2.

Afin d'évacuer lors du remplissage l'air occlus dans la bouteille de découplage, celle-ci comporte en partie supérieure un orifice supérieur de purge référencé PRGE équipé d'un clapet d'évacuation et elle comporte classiquement en partie inférieure un raccord équipé d'un robinet pour la vidange lors du démontage.

On se référera maintenant aux figures 3 à 8 pour décrire quelques cas d'applications dans le domaine du chauffage et de la climatisation.

Le schéma de base est représenté sur la figure 3. Sur cette figure, les sources de chaleur sont composées d'une pompe à chaleur complète PACC et d'une chaudière CHDR.

Selon les puissances respectives, la chaudière est utilisée en relève de la pompe à chaleur et ponctuellement en source principale. Elle peut servir d'appoint à l'autre source au-delà d'une certaine limite de la demande en calories.

Les circuits des deux sources PACC et CHDR jusqu'à la bouteille de découplage BDCPL comprennent chacun une pompe de circulation respectivement P1 et P2.

Dans la liaison entre la pompe à chaleur PACC et la bouteille de découplage BDCPL circule de l'eau glycollée en raison de l'exposition possible à de faibles températures extérieures. L'utilisation c'est-à-dire la distribution de chaleur s'effectue exclusivement dans ce cas à travers un réseau de radiateurs RDTR par un circuit unique comportant une pompe de circulation PR. Les radiateurs peuvent bien entendu être des équivalentes : convecteurs, ventilo-convecteurs ou autres.

On peut prévoir aussi comme dans l'exemple suivant, un circuit de chauffage par le sol CPLS.

L'exemple de la figure 4 comporte comme sources de chaleur une pompe à chaleur complète PACC et en série dans son circuit un module de chauffage électrique d'appoint CEAP par résistance électrique fonctionnant en relève de la pompe à chaleur PACC. Il est présumé que celle-ci peut fournir l'essentiel des besoins en calories pour le chauffage. Il n'existe qu'un seul circuit de source de chaleur avec une pompe de circulation P1. Ce circuit est branché sur les tubes supérieur d'entrée supérieure TES2 et inférieur d'entrée inférieure TEI2 correspondant au circuit de la pompe à chaleur. Du côté des circuits utilisateurs, la chaleur est diffusée par un réseau de radiateurs RDTR et un circuit de chauffage par le sol CPLS qui vient se greffer sur le circuit des radiateurs à travers une vanne mélangeuse à trois voies VANM. Chaque circuit comporte son propre circulateur PR1 et PR2.

Les installations représentées sur les figures 5 et 6 possèdent chacune une pompe à chaleur PACS dite "split" c'est-à-dire décomposée en deux blocs l'un à l'extérieur SPE, comportant le compresseur et l'évaporateur et les composants annexes et un autre bloc intérieur SPI comportant le condenseur. Dans la liaison entre les deux blocs circule un fluide frigorigène qui se condense dans la batterie du condenseur dont le circuit secondaire est branché aux tubes respectifs supérieur d'entrée supérieure TES2 et inférieur d'entrée inférieure TEI2 de la bouteille de découplage.

La chaudière et le circuit des radiateurs sont branchés comme dans l'exemple de la figure 3.

La figure 6 montre une installation qui est la transposition de l'exemple de la figure 4 dans le cas d'une pompe à chaleur du type "split". On retrouve les organes de la pompe à chaleur de la figure 5 dont le bloc extérieur SPE et le bloc condenseur intérieur SPI avec en supplément un module de chauffage d'appoint CEAP par résistance électrique.

L'invention s'applique également dans le cas d'une installation mixte de chauffage et de climatisation utilisant des pompes à chaleur réversibles avec ou sans la présence d'une chaudière de complément pour les périodes froides. Cette application est illustrée par les figures 7 et 8 où figurent des ventilo-convecteurs VTICO à la place des radiateurs.

La bouteille de découplage selon l'invention montre notamment son efficacité dans tous les cas de fonctionnements hors gel de la pompe à chaleur comprenant des retours TES2 froids car dans cette bouteille de découplage, il n'y a pas de mélange au niveau de TES1 qui pourrait y faire baisser la température.

Il est important de remarquer et de rappeler que la bouteille de découplage selon l'invention empêche le mélange du ou des fluides et permet des températures très proches entre l'entrée et la sortie.

En raison de ses dimensions limitées, la bouteille de découplage selon l'invention peut très bien s'intégrer dans un appareil de chauffage par exemple dans une chaudière. On a ainsi donné naissance à un nouvel appareil constituant l'élément central d'un système de chauffage utilisant plusieurs sources d'énergie.

Bien entendu, d'autres circuits d'application sont possibles mettant en oeuvre d'autres sources de chaleur ou une pluralité de celles-ci.

## Revendications

1. Bouteille de découplage hydraulique entre plusieurs circuits de génération et d'utilisation dans le domaine du chauffage et de la climatisation ainsi que la fourniture d'eau chaude sanitaire, bouteille de forme générale cylindrique non du type tour, et entièrement remplie par le liquide contenu dans le ou les circuits récepteurs et au moins la partie des circuits de la ou des sources de chaleur ou de froid reliés à la bouteille de découplage **caractérisée en ce qu'**elle comporte des sorties et des entrées inférieures et supérieures tubulaires se prolongeant à l'intérieur de la bouteille sous la forme de saillies droites ou coudées dont au moins une saillie coudée en partie inférieure et au moins une saillie coudée en partie supérieure et raccordées par leurs extrémités extérieures supérieures à des branches aller de circuits apporteurs d'énergie calorifique ou frigorifique et de branches aller vers le ou les circuits utilisateurs et par leur extrémités inférieures à au moins une saillie coudée d'une branche retour d'au moins un circuit utilisateur permettant pour chaque circuit des températures très proches entre l'entrée et la sortie.

2. Bouteille de découplage selon la revendication 1 **caractérisée par** une première entrée supérieure tubulaire TES1 qui est droite et placée au même niveau et en face d'une sortie supérieure tubulaire droite TSS1.

3. Bouteille de découplage selon la revendication précédente **caractérisée par** une deuxième entrée supérieure TES2 qui est située à proximité de la première entrée supérieure TES1.

4. Bouteille de découplage selon la revendication 2 ou 3 **caractérisé en ce que** la partie tubulaire droite intérieure de la sortie supérieure tubulaire TSS1 faisant saillie à l'intérieur de la bouteille est de diamètre plus important que celui de la saillie tubulaire droite de la première entrée supérieure TES1.

5. Bouteille de découplage selon les revendications 1 et 3 **caractérisée en ce que** la deuxième entrée supérieure TES2 présente une saillie intérieure coudée pour générer un flux de sortie tangentiel à la surface latérale interne de la bouteille.

6. Bouteille de découplage selon la revendication 1 **caractérisée en ce qu'**elle présente en partie inférieure deux sorties inférieures TIS1 et TIS2 du côté des circuits fournisseurs de calories et une entrée TIE du côté du ou des circuits utilisateurs et en partie supérieure deux entrées supérieures TES1 et TES2 et une sortie supérieure TSS1.

7. Bouteille de découplage selon la revendication 6 **caractérisée en ce que** le tube de la première entrée supérieure TES1 et le tube de la sortie inférieure TIS1 sont raccordés à un circuit de chaudière CHDR.

8. Bouteille de découplage selon la revendication 6 **caractérisée en ce que** le tube de la deuxième entrée supérieure TES2 et le tube de la deuxième sortie inférieure TIS2 sont raccordés à un circuit de pompe à chaleur PACC ou SPE.

9. Bouteille de découplage selon la revendication précédente **caractérisée en ce que** le circuit de la pompe à chaleur PACC ou SPE est complété par un module de chauffage d'appoint CEAP en série dans le circuit.

10. Bouteille de découplage selon la revendication 6 **caractérisée en ce que** le tube de l'entrée inférieure TIE est coudé vers la paroi latérale interne de la bouteille de découplage pour générer en partie inférieure un flux tangentiel à la surface latérale interne de la bouteille.

11. Bouteille de découplage selon la revendication précédente **caractérisée en ce que** le tube de l'entrée inférieure TIE est coudé vers la paroi latérale interne de la bouteille de découplage pour générer en partie inférieure un flux tangentiel à la surface latérale interne de la bouteille dans le même sens que le flux généré par la deuxième entrée supérieure TES2.

12. Bouteille de découplage selon la revendication 10 ou 11 **caractérisée en ce que** l'extrémité du tube de l'entrée inférieure TIE est coudée et légèrement inclinée vers le bas.

13. Bouteille de découplage selon la revendication 6 **caractérisé en ce que** l'extrémité du tube de la deuxième entrée supérieure TES2 est coudée vers la paroi latérale interne de la bouteille de découplage et légèrement inclinée vers le haut.
